# EUROPÄISCHE PATENTSCHRIFT

(11) **EP 1 724 900 B1**
(45) Veröffentlichungstag und Bekanntmachung des Hinweises auf die Patenterteilung: **05.11.2008**
(21) Anmeldenummer: 06009192.3
(22) Anmeldetag: 04.05.2006
(51) Int. Cl.: H02J 7/00, H02J 7/34

(54) **Vorrichtung und Verfahren zum Überwachen und Steuern mehrerer in Serie geschalteter Kapazitäten**
Device and method for monitoring and control a pluratilty of series connected capacitors
Procédé et dispositif pour le contrôle/surveillance de la charge des condensateurs montés en série

(30) Priorität: 21.05.2005 DE 102005023486; 09.07.2005 DE 202005010858 U
(43) Veröffentlichungstag der Anmeldung: 22.11.2006
(73) Patentinhaber: Diehl Aerospace GmbH, 88662 Überlingen (DE)
(72) Erfinder: Kolb, Tobias, 90455 Nürnberg (DE); Jordan, Jens, 90408 Nürnberg (DE)
(74) Vertreter: Diehl Patentabteilung

(56) Entgegenhaltungen:
- EP-A- 1 278 287
- EP-A- 1 414 129
- DE-A1- 19 705 192
- US-A- 5 894 212

## Beschreibung

Die Erfindung bezieht sich auf eine Vorrichtung und ein Verfahren zum Überwachen und Steuern mehrerer in Serie geschalteter Kapazitäten.

Ein Verfahren zum Symmetrieren der Kondensatoren einer Kondensatorbatterie und eine mögliche Vorrichtung hierzu sind in der EP 1 406 143 A2 offenbart. Die Kondensatorbatterie besteht aus mehreren parallel geschalteten Reihen aus jeweils einzelnen Kondensatoren, die sogenannte Ultra-Kondensatoren sein können. Damit möglichst viel Energie in einer solchen Kondensatorbatterie gespeichert werden kann, ist es wichtig, alle Kondensatoren einer Batterie gleichmäßig zu belasten, d.h. gleichmäßig und vollständig zu laden. Dieser Vorgang wird "Symmetrieren" genannt. Sollte an einzelnen Kondensatoren, wenn auch nur kurzzeitig, eine über den Nennwert hinausgehende Kondensatorspannung anliegen, so führt das zu einer schnelleren Alterung dieses Kondensators. Er muss dann im Extremfall vorzeitig entfernt werden, was aufwändig ist. Unterschiedliche Spannungen an den einzelnen Kondensatoren, die den Energiespeicher uneffizient machen, sind im Wesentlichen auf Kondensatoreigenschaften zurückzuführen, z.B. auf den Ersatz-Serienwiderstand und/oder auf die Kapazität des Kondensators. Auch Parallelwiderstände können sich auswirken.

Es ist daher erforderlich, jeden einzelnen Kondensator einer Kondensatorbatterie an einer oberen Spannungsgrenze zu laden und vor einer Überladung zu schützen, die zu einer Zerstörung des Kondensators führen könnte. Bei zu hoher anliegender Spannung könnte es zum Abblasen des Elektrolyten kommen, was eine Zerstörung des Kondensators bedeutet. Es soll aber auch mit einer Diagnose frühzeitig zu erkennen sein, ob ein Kondensator nicht voll funktionsfähig ist.

In der EP 1 406 143 A2 werden zur Überwachung des Ladezustands der Kondensatoren drei Spannungspegel durch eine Referenzspannungsquelle bereitgestellt. An jedem Kondensator wird die Kondensatorspannung ermittelt und mit den Spannungspegeln verglichen. Es wird eine korrekte Ladung eines Kondensators angezeigt, wenn die Kondensatorspannung zwischen den beiden unteren Spannungspegeln liegt. Eine Störung des Kondensators wird angezeigt, wenn die Kondensatorspannung größer ist als der höchste Spannungspegel. Es wird nur dann symmetriert, wenn weder eine korrekte Ladung noch eine Störung angezeigt wird. Es kann auch über ein Bussystem eine Auswerteeinheit über den Fehler informiert werden, so dass eine sofortige Diagnose des ausgefallenen Kondensators ermöglicht ist.

Ebenfalls offenbart die EP 1 406 143 A2 eine Vorrichtung in der parallel zu jeweils zwei oder mehr Kondensatoren der Kondensatorbatterie eine Serienschaltung aus einem ohmschen Widerstand und einem ersten Transistor angeordnet ist. Parallel zum ersten Transistor ist mindestens ein weiterer Transistor geschaltet. Die Transistoren sind mit einer Auswerteeinheit verbunden, wobei Spannungsabgriffe der Kondensatoren mit der Auswerteeinrichtung verbunden sind. Der für das Symmetrieren notwendige ohmsche Widerstand der Serienschaltung dient als Entladewiderstand und kann beispielsweise ein großer Drahtwiderstand sein. Er kann auch ein Flachbodenwiderstand, ein HSA-Widerstand oder auch ein Zementwiderstand sein. Die Transistoren sind in der Regel sogenannte Feldeffekttransistoren. Gegebenenfalls können diese Feldeffekttransistoren mit Kühlkörpern ausgestattet sein.

Aus der EP 1 414 129 A2 ist es bekannt, bei einer Serienschaltung wiederaufladbarer Batterien eine Zelle, deren Spannung beim Lade- oder Entladevorgang unter eine bestimmte Schwelle fällt, über einen Bypass aus der Serienschaltung zu isolieren.

Die DE 197 05 192 A1 offenbart ein Batterie-Überwachungssystem, bei welchem durch Parallelschaltung eines Widerstands zu einer defekten Zelle einer Serienschaltung von Batteriezellen diese "entfernt" werden kann.

In der EP 1 278 287 A1 ist eine Kondensatoreinheit offenbart, bei der die Spannung der in Serie geschalteten Kondensatoren überwacht wird und während des Entladevorgangs einem Kondensator, dessen Ladungszustand gegenüber dem mittleren Ladungszustand der übrigen Kondensatoren deutlich zu hoch ist, ein Widerstand parallel geschaltet wird.

Der Erfindung liegt die Aufgabe zugrunde, ein besonders geeignetes Verfahren und eine besonders geeignete Vorrichtung zum Überwachen oder Steuern einer Serienschaltung von Kapazitäten, insbesondere während des Ladevorgangs oder des Entladevorgangs anzugeben.

Bezüglich des Verfahrens wird die Aufgabe erfindungsgemäß gelöst durch die Merkmale des Anspruchs 1. Bezüglich der Vorrichtung wird die Aufgabe eindungsgemäß gelöst durch die Merkmale des Anspruchs 5. Vorteilhafte Weiterbildungen und Ausgestaltungen der Erfindung sind Gegenstand der Unteransprüche.

Demzufolge ist ein Verfahren zum Überwachen und Steuern mehrerer in Serie geschalteter Kapazitäten während des Ladens, des Entladens oder einer im wesentlichen konstanten Ladung vorgesehen. In diesem Verfahren wird während des Entladens der Kapazitäten eine Spannung jeder Kapazität bestimmt. Zur Bestimmung kann diese Spannung beispielsweise hochohmig abgegriffen und analog-digital umgesetzt werden.

Im Falle des Absinkens einer Spannung einer der Kapazitäten unter eine erste Schwellspannung wird diese Kapazität mittels eines Schalters zumindest bis zum Ende des Entladens überbrückt. Die Schwellspannung kann beispielsweise als digitaler Parameter eingestellt werden. Die Ansteuerung des Schalters kann dabei bis zum Entladen insbesondere digital gespeichert werden, so dass keine erneute Messung bis zum Entladezeitpunkt erforderlich ist.

Weiterhin ist vorgesehen, dass während des Ladens für eine Symmetrierung ein Unterschreiten einer Spannung einer der Kapazitäten unter eine zweite Schwellspannung detektiert wird, so dass in diesem Falle der Kapazität mit der höchsten Spannung ein Widerstand parallel geschaltet wird.

Eine Weiterbildung der Erfindung ist für die Symmetrierungsschritte vorgesehen, indem im Falle des Überschreitens einer Spannung einer der Kapazitäten über eine dritte Schwellspannung dieser Kapazität ein Widerstand parallel geschaltet wird. Dies bewirkt, dass die Zeile im Ladevorgang langsamer geladen oder über den Widerstand teilweise entladen wird. Der Widerstand kann dabei beispielsweise durch einen ohmschen Widerstand oder durch einen entsprechend angesteuerten Halbleiter realisiert sein. Für unterschiedliche Ströme können mehrere unterschiedliche Widerstände vorgesehen sein.

Eine vorteilhafte Ausgestaltung der Erfindung sieht vor, dass die zweite Schwellspannung und/oder die dritte Schwellspannung in Abhängigkeit von den Spannungen aller Kapazitäten, insbesondere deren Spannungssumme oder einer nominalen Spannung bestimmt wird. Eine nominale Spannung kann dabei mit einer ausgewählten Zeilenspannung übereinstimmen, wobei die Zeilenspannung anhand von vorbestimmten Kriterien ausgewählt wird.

Ein weiterer Aspekt der Erfindung ist eine Vorrichtung mit mehreren in Serie geschalteten Kapazitäten und einem Schaltkreis, der Mittel zur Bestimmung jeder Spannung jeder Kapazität, Mittel zum Symmetrieren der Spannungen der Kapazitäten untereinander und Mittel zum Deaktivieren zumindest einer der Kapazitäten aufweist. Zur Steuerung ist vorzugsweise als Steuereinheit eine Recheneinheit, insbesondere ein Mikrocontroller, vorgesehen. Zur Bestimmung jeder Spannung jeder Kapazität sind vorzugsweise Messmittel vorgesehen, die einen hochohmigen Eingang aufweisen und mit den Anschlüssen der jeweiligen Kapazität direkt oder über einen Multiplexer verbunden sind. Für eine sicherheitstechnische Redundanz können diese Messmittel zweifach oder mehrfach vorgesehen sein.

Als Mittel zum Symmetrieren der Spannungen der Kapazitäten untereinander sind alle Bauelemente, wie Widerstände, Induktivitäten oder Kondensatoren, geeignet, die geschaltet vorzugsweise eine gezielte Reduzierung der Ladung der zu symmetrierenden Zeile bewirken.

Zur Deaktivierung wird die jeweilige Kapazität kurzgeschlossen. Dies ist insbesondere im Falle eines detektierten Defektes dieser Kapazität nötig. Zur Deaktivierung ist vorzugsweise ein Schalter vorgesehen, der für einen möglichen auftretenden Entladestrom ausgelegt ist.

Eine bevorzugte Weiterbildung dieses Aspekts der Erfindung sieht daher vor, dass das Mittel zum Deaktivieren einen Deaktivierungsschalter aufweist, der zur Deaktivierung die jeweilige Kapazität überbrückt.

In einer bevorzugten Ausgestaltung der Erfindung ist der Deaktivierungsschalter zumindest ein Halbleiterbauelement, insbesondere ein Feldeffekttransistor, dessen Quellanschluss (Source) und Senkeanschluss (Drain) mit je einem Anschluss der Kapazität direkt verbunden ist. Zur direkten Verbindung ist zwischen dem Feldeffekttransistor und der Kapazität dabei kein Bauelement zwischengeschaltet.

Die Erfindung weiterhin ausgestaltend weist das Mittel zum Deaktivieren einen Pegelwandler auf. Ein derartiger Pegelwandler kann beispielsweise einen magnetisch gekoppelten Übertrager oder eine Ladungspumpe aufweisen.

Bevorzugt weist das Mittel zur Symmetrierung einen Widerstand und einen mit dem Widerstand in Serie geschalteten Symmetrierungsschalter auf, die zur aktiven Symmetrierung mit der jeweiligen Kapazität parallel geschaltet sind. Vorteilhafterweise ist der Symmetrierungsschalter zumindest ein Halbleiterbauelement, insbesondere ein Feldeffekttransistor. Dabei ist dessen Quellanschluss (Source) oder dessen Senkeanschluss (Drain) mit dem Widerstand direkt und nicht über ein weiteres Bauelement verbunden. Ebenfalls kann vorteilhafterweise das Mittel zum Symmetrieren einen Pegelwandler aufweisen.

In zweckmäßiger Weiterbildung weist der Schaltkreis einen integrierten Steuerschaltkreis, insbesondere einen Mikrocontroller auf, wobei einer oder mehrere Ausgänge des integrierten Steuerschaltkreises über einen Multiplexer auf jeden Pegelwandler, der einer Kapazität zugeordnet ist, multiplexbar sind. Dies ermöglicht eine serielle Steuerung zur Deaktivierung und/oder Symmetrierung der einzelnen Kapazitäten. Für eine sicherheitsnotwendige Redundanz können der Multiplexer, die Pegelwandler sowie die Mittel zur Deaktivierung und/oder Symmetrierung zweifach oder mehrfach für jede Kapazität ausgeführt sein.

In einer bevorzugten Ausgestaltung der Erfindung weist das Mittel zur Bestimmung der Spannung einen Differenzverstärker auf, dessen beide Eingänge mit den Anschlüssen der jeweiligen Kapazität verbunden sind. Vorteilhafterweise sind ein oder mehrere Ausgänge jedes Mittels dabei zur Bestimmung der Spannung auf einen oder mehrere Eingänge des integrierten Steuerschaltkreises über einen Multiplexer multiplexbar.

In einer bevorzugten Ausgestaltung der Erfindung weist jede Kapazität mehrere parallel geschaltete Kondensatoren auf, die insbesondere eine Kondensatormatrix bilden. Die Kondensatoren sind vorteilhafterweise Ultra-Kondensatoren, die für eine unterbrechungsfreie Stromversorgung verwendet werden.

Nachfolgend werden Ausführungsbeispiele der Erfindung anhand einer Zeichnung näher erläutert. Darin zeigen:
- Fig. 1: ein schematisches Blockschaltbild einer Vorrichtung mit einer Kondensatormatrix,
- Fig. 2: ein erstes Flussdiagramm eines Verfahrens zum Symmetrieren der Kondensatormatrix gemäß Fig. 1, und
- Fig. 3: ein zweites Flussdiagramm eines Verfahrens zur Deaktivierung von Kapazitäten der Kondensatormatrix gemäß Fig. 1.

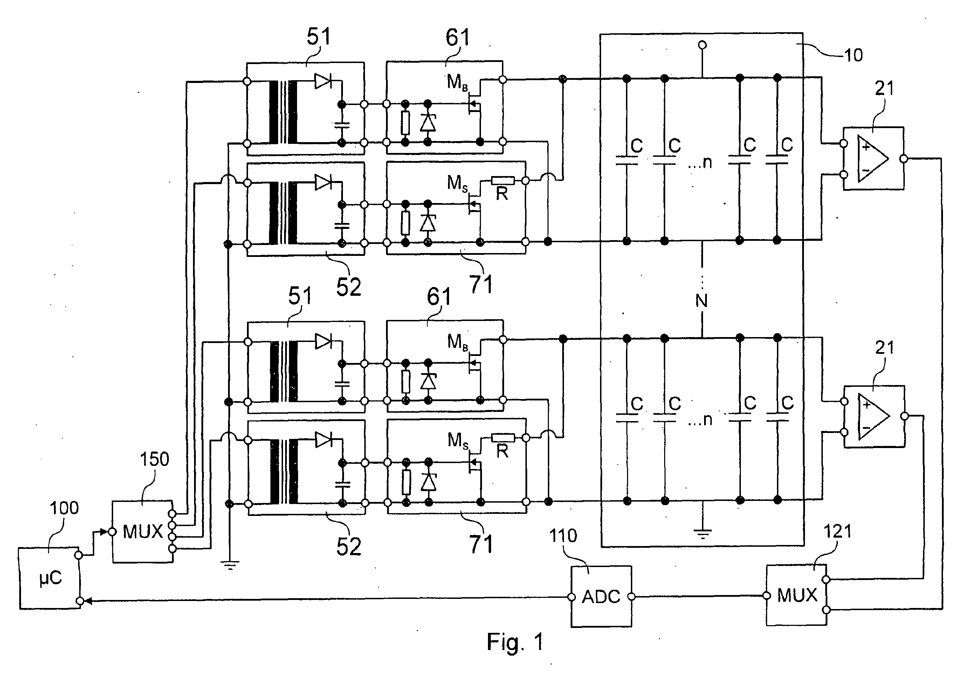

Das in Fig. 1 schematisch dargestellte Blockschaltbild wird in einem elektrisch angetriebenen Türsystem mit einer zentralen Steuerung und einer integrierten Notstromversorgung in einem Verkehrsflugzeug verwendet. Der Energiespeicher der Notstromversorgung ist dabei die Kondensatormatrix 10. Das Türsystem besteht dabei aus einer zentralen Steuerungseinheit und einer Anzahl von Türen, die elektrisch geöffnet und geschlossen werden und mit einem Zentralrechner verbunden sind. Die Türen verfügen über lokale Steuerungs-, Sensor- und Aktuatoreinheiten sowie über Notstromversorgungen zum elektrischen Öffnen und Schließen sowie zum Auslösen der Notrutschen.

Im Normalbetrieb wird das System von außen mit elektrischer Energie versorgt. Der Zentralrechner kommuniziert mit den lokalen Steuerungseinheiten und überwacht alle Türen. Bei Ausfall der zentralen Stromversorgung und/oder dem Verlust der Kommunikationsverbindung zwischen Zentralrechner und lokaler Steuerungseinheit können die Türen aufgrund der gewählten Anordnung in Verbindung mit der lokalen Notstromversorgung dennoch sicher elektrisch angetrieben, geöffnet und geschlossen werden.

Die Steuerungseinheit ist bevorzugt mit der Notstromversorgung in einem Gehäuse zusammengeführt. Als Energiespeicher wird ein kapazitiver Speicher aus einer Kondensatormatrix 10 verwendet. Die Steuerungseinheit selbst wird genutzt, um ihre eigene Notstromversorgung zu überwachen und zu regeln.

In Fig. 1 besteht die Kondensatormatrix 10 aus N Zeilen mit n parallel geschalteten Kondensatoren C. Die Zeilen sind zueinander wiederum in Serie geschaltet. Beispielsweise werden jeweils vier Kondensatoren C parallel geschaltet, so dass mit vierzehn Zeilen sich eine 14 x 4-Kondensatormatrix 10 ergibt.

Die Steuerung erfolgt durch einen Schaltkreis, der einen Mikrocontroller 100 aufweist. Mittels einer differentiellen Messtechnik 21, die beispielsweise einen Differenzverstärker aufweist, wird jede Spannung jeder Zeilenkapazität verstärkt und zu deren Bestimmung über einen Multiplexer 121 und einen Analog-Digital-Konverter 110 der Recheneinheit im Mikrocontroller 100 zugeführt. Dabei kann der Analog-Digital-Konverter 110 ebenfalls integraler Bestandteil des Mikrocontrollers 100 sein.

Der Mikrocontroller 100 steuert über einen Multiplexer 150 und einen oder mehrere Pegelwandler 51 einen ersten Feldeffekttransistor M_{B} als Teil eines Bypasses 61 zum möglichen Deaktivieren der zugeordneten Kapazitäten C der Zeile. Hierzu überbrückt der Feldeffekttransistor M_{B} des Bypasses 61 die Anschlüsse der Kondensatoren C der Zeile und schließt dabei die Kapazität kurz. Eine Symmetriereinrichtung 71 als Mittel zum Symmetrieren der Spannungen der Kapazitäten untereinander wird vom Mikrocontroller 100 über den Multiplexer 150 und einen oder mehrere Pegelwandler 52 derart gesteuert, dass im Bedarfsfall den Kapazitäten C der betroffenen Zeile mittels eines Feldeffekttransistors M_{S} ein Widerstand R der Symmetriereinrichtung 71 parallel geschaltet wird.

Die Pegelwandler 51 und 52 sind erforderlich, weil alle Bypässe 61 und Symmetriereinrichtungen 71 in der Matrix 10 auf unterschiedlichem Potential liegen. Durch das Aktivieren einer Symmetriereinheit 71 wird die entsprechende Zeile der Matrix 10 durch den Widerstand R belastet und somit langsamer geladen bzw. mehr entladen als alle anderen Matrixzeilen. Wenn die Matrix 10 selbst während des Symmetrierungsprozesses an eine konstante Spannung gelegt wird, erhöht sich die Zeilenspannung der Zeilen, deren Symmetriereinheit 71 nicht aktiv ist, so dass deren Feldeffekttransistor M_{S} sperrt. Hingegen verringert sich die Zeilenspannung der Zeilen mit aktiver Symmetriereinheit 71 gegenüber den Zeilen mit nicht aktiver Symmetriereinheit 71.

Mit dem Bypass 61 wird es dem Mikrocontroller 100 ermöglicht, eine Zeile im Energiespeicher 10 für einen Kurzschluss derselben zu überbrücken und somit zu deaktivieren. Dies kann nötig sein, wenn der Mikrocontroller 100 z.B. eine zu hohe Selbstentladung oder einen Kurzschluss in einer Zeile feststellt. Falls die kurzzuschließende Zeile vor der Aktivierung des Bypasses 61 noch über Ladung verfügt, muss diese mittels der Symmetriereinheit 71 entladen werden. Würde eine defekte Matrixzeile, die z.B. eine zu große Selbstentladung hat, nicht durch den Bypass 61 überbrückt werden, würde sich die defekte Zeile bei einem Entladeprozess umgekehrt aufladen. Dies hat zur Folge, dass weniger Energie aus der Kondensatormatrix 10 entnommen werden kann. Der Energiespeicher 10 kann bei dem oben beschriebenen Verfahren beliebig in seinen Dimensionen verändert werden.

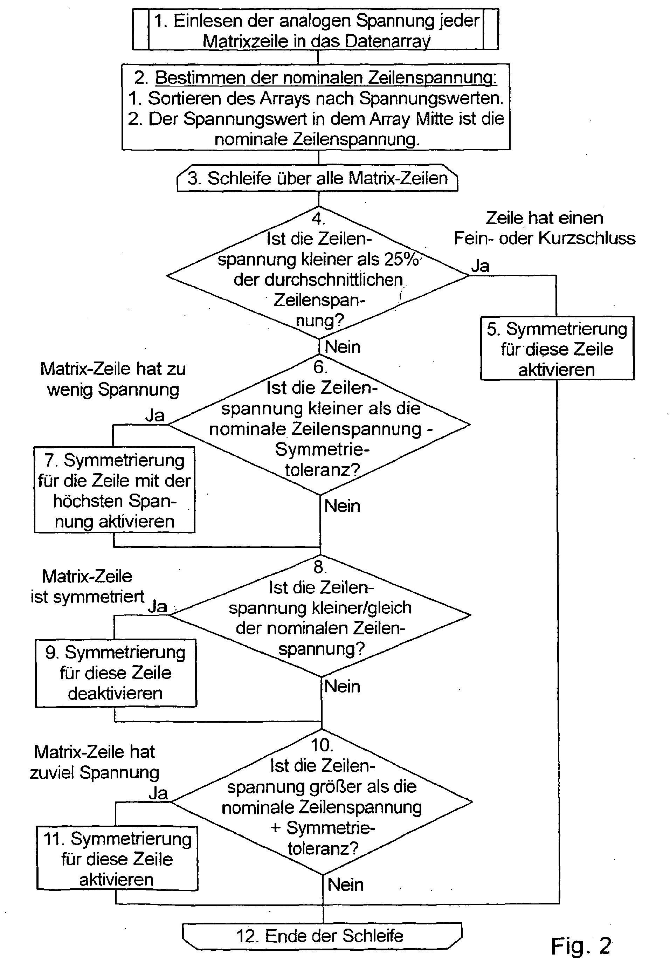

Fig. 2 zeigt ein Flussdiagramm, dass zumindest einen Teil eines Verfahrensablaufes zur Symmetrierung darstellt, das beispielsweise in Form eines Computerprogramms in dem Mikrocontroller 100 gespeichert oder in einem anwendungsspezifischen Schaltkreis (ASIC) festverdrahtet ausgebildet sein kann.

In einem ersten Verfahrensschritt werden die analogen Spannungen jeder Matrixzeile in ein Datenarray des Mikrocontrollers 100 eingelesen. Im nachfolgenden zweiten Verfahrensschritt wird eine nominale Zeilenspannung bestimmt, indem die Werte des Arrays nach Spannungswerten sortiert werden und nachfolgend der Spannungswert in der Mitte des Arrays der nominalen Zeilenspannung zugeordnet wird. Im Gegensatz zu einer Mittelwertbildung wird mit diesem Verfahrensschritt verhindert, dass defekte Zeilen einen signifikanten Einfluss auf die nominale Zeilenspannung haben.

Im dritten Schritt beginnt nun eine Schleife über alle Zeilen der Matrix. In dieser Schleife wird in Schritt vier die aktuelle betrachtete Zeilenspannung mit einem Bruchteil, insbesondere einem viertel der durchschnittlichen Zeilenspannung, vergleichen. Ist die aktuelle Zeilenspannung dabei kleiner als der Bruchteil wird die Symmetrierung für diese Zeile in Schritt fünf aktiviert, da für diese Zeile ein Fein- oder Kurzschluss angenommen werden kann. Zur Aktivierung wird der Transistor M_{S} angesteuert, so dass ein Strom fließt über den Widerstand R und den Transistor M_{S}, die parallel zur Zeile geschaltet sind.

Ist dagegen die Zeilenspannung größer als der Bruchteil der durchschnittlichen Zeilenspannung, so erfolgt in Schritt sechs eine weitere Abfrage. Ist in diesem Schritt sechs die aktuelle Zeilenspannung kleiner als die Differenz aus der nominalen Zeilenspannung und einer vorgebbaren Symmetrietoleranz, so wird in Schritt sieben die Symmetrierung für die Zeile mit der höchsten Spannung aktiviert. Nach Schritt sechs bzw. nach Schritt sieben folgt eine weitere Abfrage in Schritt acht.

Ist in Schritt acht die Zeilenspannung der aktuellen Zeile kleiner oder gleich der nominalen Zeilenspannung, so wird in Schritt neun die Symmetrierung für diese Zeile deaktiviert. Zur Deaktivierung sperrt der zugeordnete Transistor M_{S}. Nachfolgend erfolgt eine weitere Abfrage in Schritt zehn.

In Schritt zehn wird die aktuelle Zeilenspannung verglichen mit der Summe aus der nominalen Zeilenspannung und einer Symmetriertoleranz. Ist die aktuelle Zeilenspannung größer, so erfolgt in Schritt elf eine Aktivierung der Symmetrierung für diese Zeile. Schritt zwölf bildet das Ende der Schleife. Vor einem erneuten Abfragen in den Schritten vier, sechs, acht und zehn werden vorzugsweise die analogen Spannungen jeder Matrixzeile erneut in das Datenarray eingelesen und die nominale Zeilenspannung bestimmt (Schritte eins und zwei).

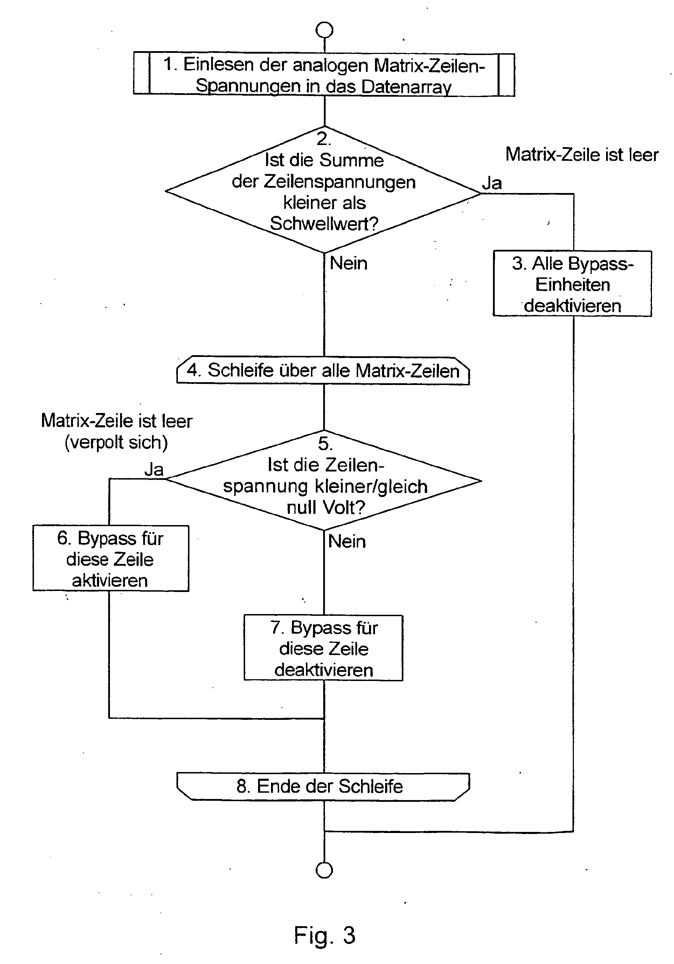

Fig. 3 zeigt ein Ablaufdiagramm zur Bypassfunktionalität, die eine Deaktivierung einer Matrixzeile ermöglicht. In einem Schritt eins werden zunächst die analogen Spannungen aller Matrixzeilen in ein Datenarray eingelesen. Nachfolgend wird in Schritt zwei abgefragt, ob die Summe aller Zeilenspannungen kleiner ist als ein Schwellwert. Gegebenenfalls werden alle Bypasseinheiten 61 in Schritt drei deaktiviert, da davon ausgegangen werden kann, dass die Kondensatormatrix 10 keine ausreichende Energie für die zugeordnete Funktionalität mehr aufweist und daher im Wesentlichen entleert ist. Ist die Summe der Zeilenspannung dagegen größer als der Schwellwert, so beginnt in Schritt vier eine Schleife über alle Zeilen der Matrix 10.

Innerhalb der Schleife wird in Schritt fünf abgefragt, ob die aktuelle Zeilenspannung kleiner oder gleich null [Volt] ist. Im bejahenden Fall kann davon ausgegangen werden, dass diese Zeile der Matrix keine Ladung mehr aufweist und sich mit einem weiteren Entladestrom verpolen oder weiter negativ aufladen würde. Das negative Aufladen einer Kondensatorzeile hat nicht nur eine Verminderung der verfügbaren Energie zur Folge, sondern auch eine Reduzierung der am Ausgang des Energiespeichers zur Verfügung stehenden Klemmenspannung. Demzufolge wird in Schritt sechs der Bypass 61 für diese Zeile aktiviert. Ist die Zeilenspannung dagegen größer Null, wird in Schritt sieben der Bypass 61 deaktiviert, sofern dieser zuvor aktiviert war. Nachfolgend ist in Schritt acht das Ende der Schleife angeführt.

### Bezugszeichen

- 10: Kondensatormatrix
- 100: Recheneinheit, Mikrocontroller
- 150, 121: Multiplexer
- 110: Analog-Digital-Umsetzer
- 51,52: Pegelwandler
- 61: Bypassvorrichtung zur Deaktivierung
- 71: Symmetriereinheit
- 21: Messmittel, Differenzverstärker
- C: Kondensator
- N: Zeilenanzahl
- n: Anzahl parallel geschalteter Kondensatoren je Zeile

## Patentansprüche

1. Verfahren zum Überwachen und Steuern mehrerer in Serie geschalteter Kapazitäten, bei dem
- während des Ladens und des Entladens der Kapazitäten eine Spannung jeder Kapazität bestimmt wird,
- während des Entladens im Falle des Absinkens einer Spannung einer der Kapazitäten unter eine erste Schwellspannung diese Kapazität, insbesondere mittels eines Schalters, zumindest bis zum Ende des Entladens überbrückt wird, und
- zu einer Symmetrierung der Spannungen der Kapazitäten während des Ladens im Falle des Unterschreitens einer Spannung einer der Kapazitäten unter eine zweite Schwellspannung der Kapazität mit der höchsten Spannung ein Widerstand (R) parallel geschaltet wird.

2. Verfahren nach Anspruch 1, **dadurch gekennzeichnet, dass**
- im Falle des Überschreitens einer Spannung einer der Kapazitäten über eine dritte Schwellspannung dieser Kapazität ein Widerstand (R) parallel geschaltet wird.

3. Verfahren nach einem der Ansprüche 1 oder 2, **dadurch gekennzeichnet, dass** die zweite Schwellspannung und/oder die dritte Schwellspannung in Abhängigkeit von den Spannungen aller Kapazitäten, insbesondere deren Spannungssumme, bestimmt wird.

4. Vorrichtung zur Durchführung des Verfahrens nach Anspruch 1, 2 oder 3 mit mehreren in Serie geschalteten Kapazitäten und einem Schaltkreis, der
- Mittel (21, 121, 110) zur Bestimmung jeder Spannung jeder Kapazität,
- Mittel (150, 52, 71, Mₛ) zum Symmetrieren der Spannungen der Kapazitäten untereinander und
- Mittel (150, 51, 61, M_{B}) zum Deaktivieren zumindest einer der Kapazitäten aufweist.

5. Vorrichtung nach Anspruch 4, **dadurch gekennzeichnet, dass** das Mittel zum Deaktivieren einen Deaktivierungsschalter (M_{B}) aufweist, der zur Deaktivierung die jeweilige Kapazität überbrückt.

6. Vorrichtung nach Anspruch 5, **dadurch gekennzeichnet, dass** der Deaktivierungsschalter zumindest ein Halbleiterbauelement, insbesondere ein Feldeffekttransistor (M_{B}) ist, dessen Quellanschluss (Source) und Senkeanschluss (Drain) mit je einem Anschluss der Kapazität direkt verbunden ist.

7. Vorrichtung nach einem der vorhergehenden Ansprüche, **dadurch gekennzeichnet, dass** das Mittel zum Deaktivieren einen Pegelwandler (51) aufweist.

8. Vorrichtung nach einem der vorhergehenden Ansprüche, **dadurch gekennzeichnet, dass** das Mittel zum Symmetrieren einen Widerstand (R) und einen, mit dem Widerstand (R) in Serie geschalteten Symmetrierungsschafter (M_{S}) aufweist, die zum Symmetrieren mit der jeweiligen Kapazität parallel geschaltet sind.

9. Vorrichtung nach Anspruch 8, **dadurch gekennzeichnet, dass** der Symmetrierungsschalter zumindest ein Halbleiterbauelement, insbesondere ein Feldeffekttransistor (M_{S}) ist, wobei dessen Quellanschluss (Source) oder dessen Senkeanschluss (Drain) mit dem Widerstand (R) direkt verbunden ist.

10. Vorrichtung nach einem der vorhergehenden Ansprüche **dadurch gekennzeichnet, dass** das Mittel zum Symmetrieren einen Pegelwandler (52) aufweist.

11. Vorrichtung nach Anspruch 7 oder Anspruch 100, **dadurch gekennzeichnet, dass** der Schaltkreis einen integrierten Steuerschaltkreis, insbesondere einen Mikrocontroller (100) aufweist, wobei einer oder mehrere Ausgänge des integrierten Steuerschaltkreises über einen Multiplexer (150) auf jeden Pegelwandler (51, 52), der einer Kapazität zugeordnet ist, multiplexbar sind.

12. Vorrichtung nach einem der vorhergehenden Ansprüche, **dadurch gekennzeichnet, dass** das Mittel (21) zur Bestimmung der Spannung einen Differenzverstärker aufweist, dessen beide Eingänge mit den Anschlüssen der jeweiligen Kapazität verbunden sind.

13. Vorrichtung nach einem der vorhergehenden Ansprüche, **dadurch gekennzeichnet, dass** ein oder mehrere Ausgänge jedes Mittels (21) zur Bestimmung der Spannung auf einen oder mehrere Eingänge des integrierten Steuerschaltkreises (100) über einen Multiplexer (121) multiplexbar sind.

14. Vorrichtung nach einem der vorhergehenden Ansprüche, **dadurch gekennzeichnet, dass** jede Kapazität mehrere parallel geschaltete Kondensatoren (C) aufweist, die insbesondere eine Kondensatormatrix (10) bilden.

## Claims

1. Method for monitoring and controlling a plurality of series-connected capacitances, in which
- a voltage of each capacitance is determined during the charging and discharging of the capacitances,
- during discharging, if a voltage of one of the capacitances falls below a first threshold voltage, this capacitance is bridged at least until the end of the discharging operation, in particular using a switch, and
- if a voltage of one of the capacitances undershoots a second threshold voltage, a resistor (R) is connected in parallel with the capacitance having the highest voltage in order to balance the voltages of the capacitances during charging.

2. Method according to Claim 1, **characterized in that**
- if a voltage of one of the capacitances exceeds a third threshold voltage, a resistor (R) is connected in parallel with this capacitance.

3. Method according to either of Claims 1 and 2, **characterized in that** the second threshold voltage and/or the third threshold voltage is/are determined on the basis of the voltages of all capacitances, in particular the voltage sum thereof.

4. Device for carrying out the method according to Claim 1, 2 or 3, having a plurality of series-connected capacitances and a circuit which has
- means (21, 121, 110) for determining each voltage of each capacitance,
- means (150, 52, 71, M_{S}) for balancing the voltages of the capacitances, and
- means (150, 51, 61, M_{B}) for deactivating at least one of the capacitances.

5. Device according to Claim 4, **characterized in that** the deactivating means has a deactivation switch (M_{B}) which bridges the respective capacitance for the purpose of deactivation.

6. Device according to Claim 5, **characterized in that** the deactivation switch is at least one semiconductor component, in particular a field effect transistor (M_{B}) whose source connection (source) and drain connection (drain) are directly connected to a respective connection of the capacitance.

7. Device according to one of the preceding claims, **characterized in that** the deactivating means has a level converter (51).

8. Device according to one of the preceding claims, **characterized in that** the balancing means has a resistor (R) and a balancing switch (M_{S}), which is connected in series with the resistor (R), said resistor and switch being connected in parallel with the respective capacitance for balancing purposes.

9. Device according to Claim 8, **characterized in that** the balancing switch is at least one semiconductor component, in particular a field effect transistor (M_{S}) whose source connection (source) or drain connection (drain) is directly connected to the resistor (R).

10. Device according to one of the preceding claims, **characterized in that** the balancing means has a level converter (52).

11. Device according to Claim 7 or Claim 10, **characterized in that** the circuit has an integrated control circuit, in particular a microcontroller (100), one or more outputs of the integrated control circuit being able to be multiplexed to each level converter (51, 52), which is assigned to a capacitance, by means of a multiplexer (150).

12. Device according to one of the preceding claims, **characterized in that** the means (21) for determining the voltage has a differential amplifier whose two inputs are connected to the connections of the respective capacitance.

13. Device according to one of the preceding claims, **characterized in that** one or more outputs of each means (21) for determining the voltage can be multiplexed to one or more inputs of the integrated control circuit (100) by means of a multiplexer (121).

14. Device according to one of the preceding claims, **characterized in that** each capacitance has a plurality of capacitors (C) which are connected in parallel and form a capacitor matrix (10) in particular.

## Revendications

1. Procédé pour surveiller et commander plusieurs capacités branchées en série, avec lequel
- une tension de chaque capacité est déterminée lors de la charge et de la décharge des capacités,
- pendant la décharge, si la tension de l'une des capacités chute au-dessous d'une première tension de seuil, cette capacité est court-circuitée au moins jusqu'à la fin de la décharge, notamment au moyen d'un commutateur, et
- si une tension de l'une des capacités devient inférieure à une deuxième tension de seuil, une résistance (R) est connectée en parallèle avec la capacité ayant la tension la plus élevée afin de symétriser les tensions des capacités pendant la charge.

2. Procédé selon la revendication 1, **caractérisé en ce que**
- si une tension de l'une des capacités devient supérieure à une troisième tension de seuil, une résistance (R) est connectée en parallèle avec cette capacité.

3. Procédé selon l'une des revendications 1 ou 2, **caractérisé en ce que** la deuxième tension de seuil et/ou la troisième tension de seuil sont déterminées en fonction des tensions de toutes les capacités, notamment de la somme de leurs tensions.

4. Dispositif pour mettre en oeuvre le procédé selon la revendication 1, 2 ou 3, comprenant plusieurs capacités branchées en série et un circuit de commutation qui présente
- des moyens (21, 121, 110) pour déterminer chaque tension de chaque capacité,
- des moyens (150, 52, 71, M_{S}) pour rendre les tensions des capacités symétriques entres elles et
- des moyens (150, 51, 61, M_{B}) pour désactiver au moins l'une des capacités.

5. Dispositif selon la revendication 4, **caractérisé en ce que** le moyen de désactivation présente un commutateur de désactivation (M_{B}) qui court-circuite la capacité correspondante pour la désactiver.

6. Dispositif selon la revendication 5, **caractérisé en ce que** le commutateur de désactivation est au moins un composant semiconducteur, notamment un transistor à effet de champ (M_{B}) dont la borne de source et la borne de drain sont respectivement reliées directement avec une borne de la capacité.

7. Dispositif selon l'une des revendications précédentes, **caractérisé en ce que** le moyen de désactivation présente un convertisseur de niveau (51).

8. Dispositif selon l'une des revendications précédentes, **caractérisé en ce que** le moyen de symétrisation présente une résistance (R) et un commutateur de symétrisation (M_{S}) branché en série avec la résistance (R), lesquels sont connectés en parallèle avec la capacité correspondante pour réaliser la symétrisation.

9. Dispositif selon la revendication 8, **caractérisé en ce que** le commutateur de symétrisation est au moins un composant semiconducteur, notamment un transistor à effet de champ (M_{S}) dont la borne de source ou la borne de drain est reliée directement avec la résistance (R).

10. Dispositif selon l'une des revendications précédentes, **caractérisé en ce que** le moyen de symétrisation présente un convertisseur de niveau (52).

11. Dispositif selon la revendication 7 ou la revendication 10, **caractérisé en ce que** le circuit de commutation présente un circuit de commande intégré, notamment un microcontrôleur (10), une ou plusieurs sorties du circuit de commande intégré pouvant être multiplexées par le biais d'un multiplexeur (150) sur chaque convertisseur de niveau (51, 52) qui est affecté à une capacité.

12. Dispositif selon l'une des revendications précédentes, **caractérisé en ce que** le moyen (21) de détermination de la tension présente un amplificateur différentiel dont les deux entrées sont reliées avec les bornes de la capacité correspondante.

13. Dispositif selon l'une des revendications précédentes, **caractérisé en ce qu'**une ou plusieurs sorties de chaque moyen (21) de détermination de la tension peuvent être multiplexées par le biais d'un multiplexeur (121) sur une ou plusieurs entrées du circuit de commande (100) intégré.

14. Dispositif selon l'une des revendications précédentes, **caractérisé en ce que** chaque capacité présente plusieurs condensateurs (C) branchés en parallèle, lesquels forment notamment une matrice de condensateurs (10).
